(19) Europäisches Patentamt / European Patent Office / Office européen des brevets

(11) **EP 1 563 483 B1**

(12) **EUROPEAN PATENT SPECIFICATION**

(45) Date of publication and mention
of the grant of the patent:
**28.08.2013 Bulletin 2013/35**

(51) Int Cl.:
*H04N 9/67* (2006.01)     *G09G 5/02* (2006.01)
*H04N 1/60* (2006.01)

(21) Application number: **03758643.5**

(22) Date of filing: **02.11.2003**

(86) International application number:
**PCT/IL2003/000905**

(87) International publication number:
**WO 2004/040548 (13.05.2004 Gazette 2004/20)**

(54) **SYSTEM AND METHOD OF SELECTIVE ADJUSTMENT OF A COLOR DISPLAY**

SYSTEM UND VERFAHREN ZUR SELEKTIVEN EINSTELLUNG EINER FARBANZEIGE

SYSTEME ET PROCEDE DE REGLAGE SELECTIF D'UN ECRAN D'AFFICHAGE EN COULEURS

(84) Designated Contracting States:
**AT BE BG CH CY CZ DE DK EE ES FI FR GB GR HU IE IT LI LU MC NL PT RO SE SI SK TR**

(30) Priority: **31.10.2002 US 422484 P**

(43) Date of publication of application:
**17.08.2005 Bulletin 2005/33**

(73) Proprietor: **Genoa Color Technologies Ltd.**
**Herzliya 46733 (IL)**

(72) Inventors:
• **BEN-CHORIN, Moshe**
  **76262 Rehovot (IL)**
• **BARUCHI, Itay**
  **64957 Tel Aviv (IL)**

(74) Representative: **Pearl Cohen Zedek Latzer UK LLP**
**15 Old Bailey**
**London EC4M 7EF (GB)**

(56) References cited:
**US-A- 6 072 464     US-B1- 6 366 291**

• **CHING-YU TSAI ET AL: "Color Reproduction of Twist Nematic LCD by Polynomial Regression Applied in Primary-Invariance Model" 1999 SID INTERNATIONAL SYMPOSIUM - MAY 18-20, 1999, SAN JOSE, CALIFORNIA, 18 May 1999 (1999-05-18), XP007008931**
• **GAURAV SHARMA: "LCDs Versus CRTs-Color-Calibration and Gamut Considerations" PROCEEDINGS OF THE IEEE, IEEE. NEW YORK, US, vol. 90, no. 4, 1 April 2002 (2002-04-01), XP011064994 ISSN: 0018-9219**
• **KWAK Y ET AL: "Accurate prediction of colours on liquid crystal displays" COLOR SCIENCE AND ENGINEERING: SYSTEMS, TECHNOLOGIES, APPLICATIONS : FINAL PROGRAM AND PROCEEDINGS OF IS&T AND SID NINTH COLOR IMAGING CONFERENCE, IS&T, SPRINGFIELD, VA, US, vol. 9, 1 November 2001 (2001-11-01), pages 355-360, XP008108764 ISBN: 978-0-89208-235-3**

## Description

### Field of the Invention

The invention relates generally to color adjustment of color displays and, more particularly, to selective adjustment of a primary color component of the display.

### Background of the Invention

Liquid Crystal (LC) devices are used in different types of displays, including LC transmission-type displays for direct viewing, typically employed by laptop and desktop computers, cellular telephones, and other mobile devices. In recent years, LC on silicon devices (LCoS) have been developed for use as reflective or transmissive spatial light modulators (SLM's) of projection display devices. Such a projection display device includes an array of LC cells, one or more cell for each image pixel, wherein each cell modulates the intensity of light passing through or reflected from the cell. The LC cell rotates the polarization of the incident polarized light according to the voltage applied to the cell. The outgoing light passes through an additional polarizing element. Therefore, the ratio between the intensity of outgoing light and that of the incident light is controlled by the rotation of the polarization. Generally, if the two fixed polarizers are set in perpendicular polarizations and the LC cell does not rotate the polarization of the incoming light, the device is in a "dark" state. Conversely, if the LC cell rotates the polarization by 90 degrees, the device is in a "bright" state. Partial rotation of the polarization yields intermediate tones, i.e., gray levels. The relation between the applied voltage and the relative intensity obtained from the device, with respect to the bright state, is commonly referred to as the "response function" of the device, or the "gamma" of the device.

"Gamma correction" refers to a function applied to a LC device to adjust its tone gradation response. In a typical Gamma correction algorithm, pixel data is converted into new values using a look-up-table. The new values are used to control the voltage applied to the device. Using such look-up-table correction, the gradation response can be adjusted to meet required performance parameters.

In color displays, the light modulated by the SLM is also filtered by appropriate color filters. The combination of colored light and controlled gradation levels for each of a plurality of primary color pixels allows the representation of color images. The mixing of the different primaries may be temporal, as in sequential projection devices; simultaneous, as in three-panel RGB projection devices; or spatial, as in direct view LC display devices. In sequential display systems, a stream of sequential single color sub-frames is temporally integrated by the viewer's eye to obtain a color image. In simultaneous display systems, three RGB sub-images, produced by three separate panels, are viewed simultaneously. In direct view systems, the eye of the viewer integrates the light coming from neighboring sub-pixels of different colors to obtain a full color image.

An underlying assumption in the design of existing LC color displays is that the color of outgoing light may be determined in a straightforward manner by the light source and color filters used. According to this assumption, the chromaticity of a primary color pixel is determined by the respective light source and/or color filter, and the intensity of the primary color pixel is determined by the amount of the polarization rotation of the respective LC cell. Thus, according to the above assumption, the control of intensity is separated from the chromaticity of the primary. Unfortunately, while the above assumption is reasonably accurate in the case of cathode ray tube (CRT) color displays, it is significantly inaccurate in the case of LC color displays. Nevertheless, this straightforward approach, which is inherently inaccurate, simplifies the handling of data for color images in existing LC color displays.

An inherent problem of LC devices is that they do not behave as perfect polarization rotators. The polarization rotation depends on the width of the LC layer, the difference between the effective refractive indices for the two polarization modes, and the wavelength of incident light. For non-monochromatic light, the amount of polarization rotation will depend on the wavelength and, therefore, the transmission of different wavelengths in the spectra may differ significantly. Furthermore, there may be significant differences in the relative transmission of different wavelengths between the "bright" state and the "dark" state of the cell. Thus, changing the voltage applied to the cells affects the spectrum of the outgoing light in addition to its intensity and, therefore, the viewed colors may be significantly distorted. This inaccuracy is not desirable in any color display, but may be particularly significant in color display applications that require enhanced accuracy in viewing colors, such as print-proofing or high-end display applications.

Reference is made to the following document: CHING-YU TSAI ET AL: "Color Reproduction of Twist Nematic LCO by Polynomial Regression Applied in Primary-Invariance Model", 1999 SIO INTERNATIONAL SYMPOSIUM - MAY 18-20,1999, SAN JOSE, CALIFORNIA, 18 May 1999 (1999-05-18), XP007008931. CHING-YU TSAI discloses correcting RGB values on a display (a "forward model") by providing a DAC (digital-to-analog converter) correction matrix, which requires finding the inverse of the forward model. Finding the inverse of the forward model needs an iterative adjustment and is therefore not a simple way to achieve good results.

Summary

In one aspect there is provided in the following a method of selectively adjusting chromaticity of colors displayed by a color display to correct for intensity-dependent chromaticity variations caused by the display, the method comprising:

- receiving input pixel color intensity data for a pixel, said input pixel color intensity data comprising pixel intensity values for four or more primary color components and including at least one minor-shifted primary color component and at least one major-shifted primary color component, the major-shifted primary color component having a greater variation of chromaticity with intensity caused by the display than the minor shifted primary color component;
- adjusting the pixel intensity value of the at least one major-shifted primary color component for a pixel by a chromaticity correction value, said chromaticity correction value based on the pixel intensity value of only the major-shifted primary color component of said pixel; and
- adjusting the pixel intensity value of the at least one minor-shifted primary color component for said pixel by combining the pixel intensity value for the minor-shifted primary color component with a chromaticity correction value based on said pixel intensity value of only said at least one major-shifted primary color component of said pixel.

There is also provided a display system comprising a color adjustment unit configured to selectively adjust chromaticity of colors displayed by the display according to the method described above.

According to embodiments disclosed, RGB data provided to a pixel of a display, e.g., a LCD based display, may be corrected or adjusted so that the color of the displayed pixel would be similar to the color produced with the same RGB input data on a reference display. In this context, the reference display may be defined as a display with the property that the chromaticity values of primary color pixel components, and thus the colors of pixels, are independent of the intensity of the primary color pixel components, which determine the intensity of the pixels.

According to embodiments disclosed a method of selective color display adjustment may include adjusting an intensity value of a first primary color component of a pixel based, at least in part, on an intensity value of a second primary color component of the pixel, as described in detail below.

According to embodiments of the invention the method may also include performing the adjusting for a plurality of pixels of a color image to be displayed by the color display.

According to embodiments disclosed, the method may include calculating an adjusted intensity value for the first primary color component using a conversion operator dependent on one or more of the intensity values of the primary color components.

According to some exemplary embodiment disclosed, the method may include determining an initial conversion operator, and converting the intensity values of the primary color components into initial converted intensity values using the initial conversion operator. The method may also include adjusting the conversion operator based on the converted values to provide an adjusted conversion operator, and converting the intensity values of the primary components using the adjusted conversion to provide adjusted converted intensity values. The method may further include comparing between the initial converted intensity values and the adjusted converted intensity values, re-initializing the conversion operator according to the adjusted conversion operator, and repeating the adjusting, the converting based on the adjusted conversion operator, and the re-initializing, until a predefined difference between the initial converted intensity values and the adjusted converted intensity values is achieved.

According to other exemplary embodiments disclosed, the method may include obtaining one or more device-dependent intensity values corresponding to one or more imaginary intensity values of the primary color components, and combining one or more of the device dependent intensity values. The obtaining of one or more device-dependent values may include using one or more look-up tables to associate each of the one or more imaginary intensity values with a respective plurality of the device-dependent values.

According to other exemplary embodiments disclosed, the method may include adding a sub-adjustment value to a first imaginary intensity value based on a second imaginary intensity value, wherein the first and second imaginary intensity values correspond to the first and second primary color components, respectively.

According to embodiments disclosed, there is provided a display system including a color adjustment unit to selectively adjust an intensity value of a first primary color component of a pixel based, at least in part, on an intensity value of a second primary color component of the pixel. The system may also include a driver to receive the adjusted intensity value from the color adjustment unit and to drive a color display device according to the adjusted intensity value.

According to some exemplary embodiments, the color adjustment unit may include a logic unit to obtain one or more device-dependent intensity values corresponding to one or more imaginary intensity values of the primary color components, and to combine one or more of the device dependent intensity values.

According to other exemplary embodiments, the color adjustment unit may include a logic unit to add a sub-adjustment value to a first imaginary intensity value based on a second imaginary intensity value, wherein the first and second imaginary intensity values correspond to the first and second primary color components, respectively.

Brief Description of the Drawings

The invention may be understood and appreciated more fully from the following description of embodiments read in conjunction with the accompanying drawing, in which:

Fig. 1 is a schematic flow chart illustration of an iterative method of selective color display adjustment in accordance with exemplary embodiments ;

Fig. 2 is a schematic chromaticity diagram, showing a color gamut that may be used to define imaginary primary colors in accordance with exemplary embodiments;

Fig. 3 is a schematic flow chart illustration of a non-iterative method of selective color display adjustment in accordance with exemplary embodiments;

Fig. 4 is a schematic flow chart illustration of a method of selective color adjustment for a more than three primary color display, in accordance with exemplary embodiments of the invention; and

Fig. 5 is a schematic block diagram illustration of a system of selective color display adjustment in accordance with exemplary embodiments of the invention.

Detailed Description of Embodiments of the Invention

According to exemplary embodiments of the invention, the RGB data provided to a pixel of a display, e.g., a LCD based display, may be corrected or adjusted so that the color of the displayed pixel would be similar to the color produced with the same RGB input data on a reference display. In this context, the reference display may be defined as a display with the property that the chromaticity values of primary color pixel components, and thus the colors of pixels, are independent of the intensity of the primary color pixel components, which determines the intensity of the pixels.

According to embodiments of the invention, a method of selective color display adjustment may include adjusting an intensity value of a first primary color component of a pixel based, at least in part, on an intensity value of a second primary color component of the pixel, as described in detail below.

A color of a given pixel of a reference display may be calculated by applying elements of a matrix of primary color components to a linearized input of the pixel. To produce a linearized input, three-primary input data, e.g., RGB data, may be converted into a signal representing linear intensity levels of the primary color components, whereby the color of the pixel may be determined in absolute terms, e.g., using a three dimensional coordinate system, for example, XYZ coordinates. Thus, the color of a pixel may be defined in terms of a weighted sum of the XYZ coordinates, wherein the relative weights of different primaries are determined by their respective linear intensity values. In mathematical terms, an XYZ color vector may be obtained, for example, by multiplying an input RGB vector (also referred to as "RGB triad") by an appropriate matrix, as follows:

$$\begin{pmatrix} X_C \\ Y_C \\ Z_C \end{pmatrix} = \begin{pmatrix} X_R & X_G & X_B \\ Y_R & Y_G & Y_B \\ Z_R & Z_G & Z_B \end{pmatrix} \cdot \begin{pmatrix} R \\ G \\ B \end{pmatrix} \qquad (1)$$

In Equation 1, the subscript "c" indicates the color corresponding to the input RGB triad, and the subscripts "R", "G" and "B" represent the corresponding display primaries in this example. Thus, the conversion matrix from RGB to XYZ may be based on the XYZ values of the display primaries. This matrix is referred to herein as the "direct conversion matrix". It should be noted that the triad $(X_C, Y_C, Z_C)$ represents the colorimetric value of the color of the pixel as it appears on a reference display characterized by the direct conversion matrix, for linearized RGB signals. It will be appreciated by those skilled in the art that according to embodiments of the invention, Equation 1 may be implemented in various forms, for example, in the direct conversion matrix form, to transform any first color data format, e.g., RGB data, into any second color data format, e.g., XYZ data. For example, the second color format may be based on any RGB space including pre-defined luminance-independent red, green and blue primary components.

Some applications may require conversion of the second color data format, e.g., the XYZ data or data in any other pre-defined absolute color coordinates, back into corresponding values in the first color data format, e.g., the RGB data format or any other device-dependent primary color data format. In general, such conversion may be required when it is desired to more accurately control the color appearing on the display, namely, to control the values of a vector $(X_C, Y_C, Z_C)$, e.g., in applications that cannot rely on the accuracy of the device-dependent colors produced in response to the original RGB data. Examples of display systems that require enhanced accuracy may include display systems used in color print proofing applications, or LC display systems designed to emulate the color accuracy of CRT display systems. In such cases, the XYZ data may be based on a model of the behavior of the print or the CRT monitor, and conversion into RGB values or into other desired primary-color formats may be required in order to obtain the required XYZ response by the LC display. Alternatively, such a conversion may be done to avoid color shifts in the presentation of video image that may affect the quality of the presented image.

It will be appreciated by those skilled in the art that according to embodiments of the invention, the RGB data format may be used for representing the absolute color space as well as for representing adjusted color coordinates. For example, RGB input data may be converted into an absolute color space including "pure" primary color components, whose chromaticity values do not depend on the intensity values of the components. An adjustment may be applied to the intensity values of the RGB data in the absolute color space such that when the adjusted values undergo a color shift by the display, the resulting color would be the one calculated for the absolute space. It will be noted, that although the absolute color space may be represented in terms of the RGB color space, e.g., as described above, in the following description the absolute color space will be referred to as the XYZ color space.

The conversion from the XYZ values back into the RGB values may be performed by matrix multiplication. For example, an inverted primary-color matrix may be used, as follows:

$$\begin{pmatrix} R \\ G \\ B \end{pmatrix} = \begin{pmatrix} X_R & X_G & X_B \\ Y_R & Y_G & Y_B \\ Z_R & Z_G & Z_B \end{pmatrix}^{-1} \cdot \begin{pmatrix} X_C \\ Y_C \\ Z_C \end{pmatrix} \qquad (2)$$

The inverted conversion matrix in Equation 2, hereinafter referred to as the "inverse conversion matrix", may be obtained by inverting the direct conversion matrix.

The conversion in Equation 2 assumes that the chromaticity of the display primaries is fixed, e.g., as in a CRT display, and that the change in the relative intensity of the primary does not influence the displayed chromaticity. However, as discussed above, this is not the case for LC displays, wherein the chromaticity of the primaries may vary significantly with intensity. Thus, the use of a fixed inverse conversion matrix to convert from XYZ values into RGB values would result in distortion of the colors displayed by the LC display.

This problem may be solved by using an inverse conversion matrix including elements, which are dependent on the intensity values of the primary color components. This may be achieved, for example, by mapping the XYZ values of each of the primary colors as a function of its intensity, as described below.

The intensity value of each primary color may be scaled to a value in the range of 0-1, wherein a value of 1 indicates maximum intensity for that primary and a value of 0 indicates minimum intensity. Using the maximum value as a reference, the intensity may be reduced by changing the input data to values smaller than 1. For example, the coordinate $R$ in the one-dimensional "red" space may be mapped to a vector $\underline{R}$ in the three dimensional XYZ space, using a function $\underline{R}(R)$. Analogous mapping may be used for all the primary colors, e.g., to produce red and blue vectors, $\underline{G}$ and $\underline{B}$, respectively.

When the chromaticity of the primary is fixed with respect to the intensity, the following mapping may be used:

$$\underline{R} = R \cdot \underline{r}, \text{ wherein } \underline{r} = (X_R, Y_R, Z_R) \text{ is a fixed vector;} \qquad (3)$$

$$\underline{G} = G \cdot \underline{g}, \text{ wherein } \underline{g} = (X_G, Y_G, Z_G) \text{ is a fixed vector;}$$

and

$$\underline{B} = B \cdot \underline{b}, \text{ wherein } \underline{b} = (X_B, Y_B, Z_B) \text{ is a fixed vector.}$$

When the chromaticity of the primary is not fixed with respect to the intensity, the following mapping may be used:

$$\underline{R} = R \cdot \underline{r}(R), \text{ wherein } \underline{r} \text{ is a function of the coordinate R} \qquad (4)$$

$$\underline{G}=G\cdot\underline{g}(G), \text{ wherein } \underline{g} \text{ is a function of the coordinate } G$$

$$\underline{B}=B\cdot\underline{b}(B), \text{ wherein } \underline{b} \text{ is a function of the coordinate } B$$

For each primary, the corresponding vector function in Equation 4 may be replaced by a set of three look-up-tables (LUT's) including normalized X, Y and Z values of that primary as a function of the intensity of the primary, e.g., the function r(R) may be pre-sampled to map a plurality of discrete R values into corresponding normalized vectors, the function g(G) may be pre-sampled to map a plurality of discrete G values into corresponding normalized vectors, and the function $\underline{b}$(B) may be pre-sampled to map a plurality of discrete B values into corresponding normalized vectors. Given the three functions $\underline{r}$(R), $\underline{g}$(G) and $\underline{b}$(B), selective color adjustment may be applied as described below.

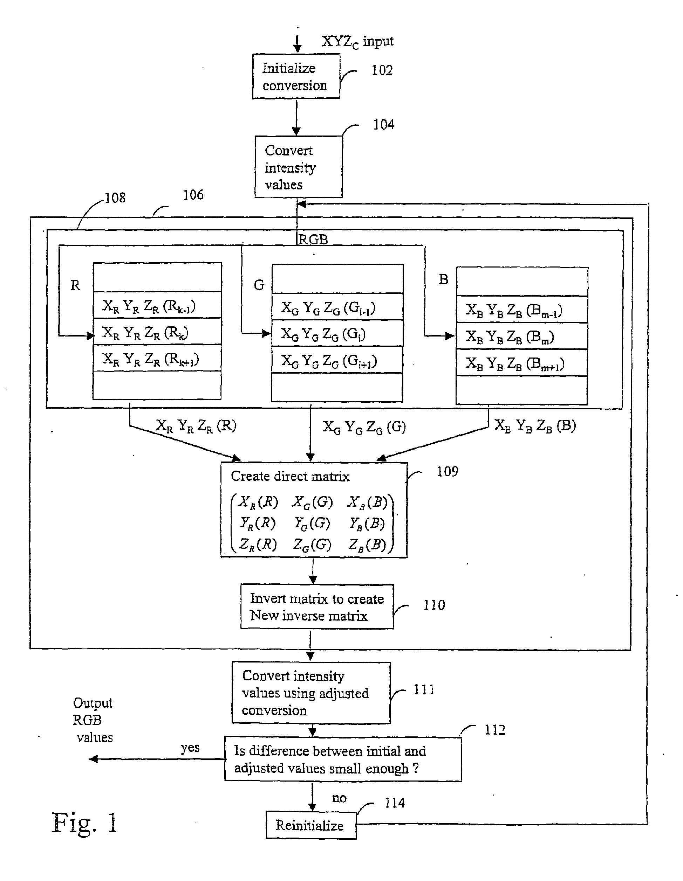

Reference is now made to Fig. 1, which schematically illustrates an iterative method of selective color display adjustment.

As indicated at block 102, the method may include determining an initial conversion operator corresponding to a conversion of XYZ values, i.e., intensity values of the primary color components into initial converted RGB values.

Determining the initial conversion operator may include selecting one or more intensity values. For example, when an input $XYZ_C$ enters the system, predetermined values of XYZ for each primary color, e.g., the brightest level values for $\underline{r}$(R=1), $\underline{g}$(G=I) and $\underline{b}$(B=1), may be used to create a direct conversion matrix similar to the direct matrix of Equation 1. The direct matrix may then be inverted to obtain the conversion operator, which may include an inverse conversion matrix similar to the inverse conversion matrix of Equation 2.

As indicated at block 104, the method may also include converting the XYZ values into the initial converted intensity values, using the initial conversion operator, i.e., using the inverse conversion matrix.

As indicated at block 106, the conversion operator may be adjusted based on the converted values, i.e., the RGB values. This may be achieved, for example, by using the RGB values as inputs for the primary color functions $\underline{r}$ (R), $\underline{g}$(G) and $\underline{b}$(B), so that adjusted XYZ values for each of the primaries are obtained, as indicated at block 108. According to some exemplary embodiments a set of LUTs may be used, each LUT may include the adjusted XYZ values corresponding to one of the primaries. The adjusted XYZ values may be used to create an adjusted direct conversion matrix, as indicated at block 109. An adjusted inverse conversion matrix may be constructed by inverting the adjusted direct conversion matrix, as indicated at block 110.

As indicated at block 111, the input XYZ values may be converted using the adjusted conversion operator to provide adjusted converted intensity values. For example, the adjusted conversion operator, i.e., the adjusted inverse conversion matrix, may be multiplied by the input data, e.g., according to Equation 2, to obtain an adjusted set of RGB values.

As indicated at block 112, the method may also include comparing between the initial converted intensity values and the adjusted converted intensity values.

As indicated at block 114, the conversion operator may be re-initialized. For example, the conversion operator may be re-initialized according to the values of the adjusted conversion operator. This may be achieved, for example, by substituting elements of the initial conversion operator with respective values of the adjusted conversion operator.

As shown in Fig. 1, the above process may be repeated iteratively, until the difference between consecutive iterations is sufficiently small, i.e., until a pre-determined difference between the initial converted intensity values and the adjusted converted initial values is achieved. However, it should be appreciated that in many cases a single iteration may be sufficient to reach the desired color accuracy. Furthermore, since neighboring pixels of an image are typically similar, except in border regions that cover only a small area of the image, there is generally no need to start the process with the brightest level matrix for each pixel; instead, the starting point for correcting the color of each pixel may be based on the last matrix obtained for the previous pixel, i.e., the initial intensity values may be selected according to intensity values of primary color components of a neighboring pixel. This may result in a significantly more efficient iterative process, i.e., a smaller number of iterations may be required to determine the correct color of at least some of the pixels.

It is appreciated that, in certain applications, the iterative process described above may not be sufficiently efficient. For example, the accuracy that may be obtained by such an iterative process may be limited due to the speed required by motion video applications. Therefore, an aspect of the present invention avoids such iterative procedure, as described below.

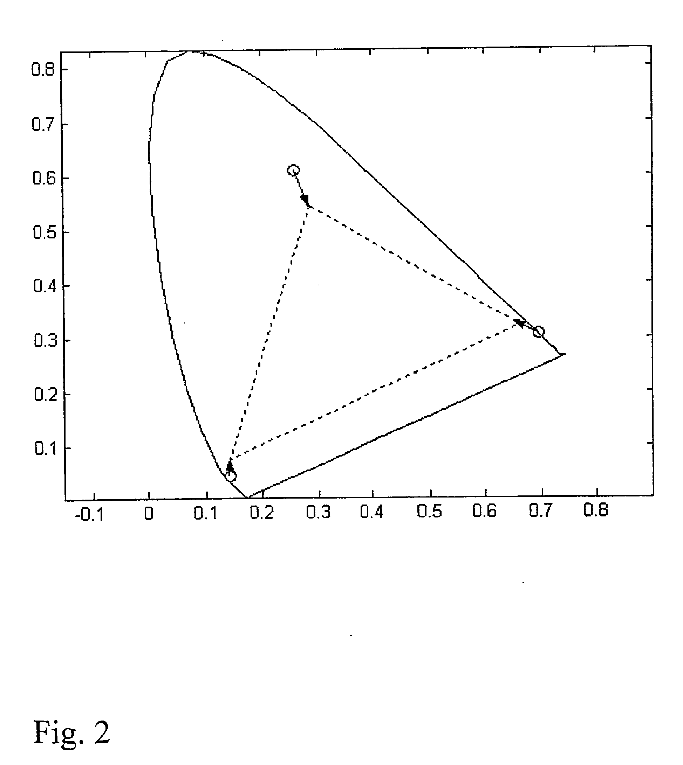

As discussed above, the chromaticity of the primary colors may vary with their intensity, namely, each primary color may be represented by a curve on a chromaticity plane, such as the chromaticity diagram depicted in Fig. 2.

The dashed triangular area in Fig. 2 represents the color gamut that may be obtained from combinations of three primary colors at an intensity level that results in the widest possible gamut that is fully contained by the color gamut obtained from the same primary colors at any other intensity level. The corners of the triangular area, as defined above, define three chromaticity value points, which are referred to herein as "imaginary primary colors". It will be appreciated by persons skilled in the art that such imaginary primary colors may be pre-defined based on device-dependent color-shift parameters.

For a given intensity level of each imaginary primary, as defined above, it is possible to calculate the RGB values that would yield a correct chromaticity. For example, in case of the imaginary "red" primary, a function $\underline{r}^*(R^*)$ defining a vector in the RGB space may be used, wherein $R^*$ denotes the intensity of the imaginary "red" primary and $\underline{r}^*$ is a three-component vector of RGB values, the combination of which would yield a color with the chromaticity of the required imaginary red primary at a normalized intensity $R^*$. In this example, the chromaticity of the imaginary "red" primary is fixed, and $R^*$ is in the range of 0 - 1, wherein 1 represents the maximum intensity of the imaginary red primary. It should be noted that a fixed vector $\underline{r}^*=(R, G, B)$, in which the value of R is close to 1 and the values B and G represents small corrections, may be suitable for many types of display devices. It should be appreciated that the imaginary B and G primary colors may be defined by functions analogous to those used to define the imaginary R primary.

In some embodiments of the invention, the vector functions may be obtained using an iterative method, e.g., as described above with reference to Fig. 1; however other methods may also be suitable. For each imaginary primary, the RGB values of the vector functions may be stored in look-up-tables (LUTs), for example, three LUTs representing R, G and B, respectively, as described above.

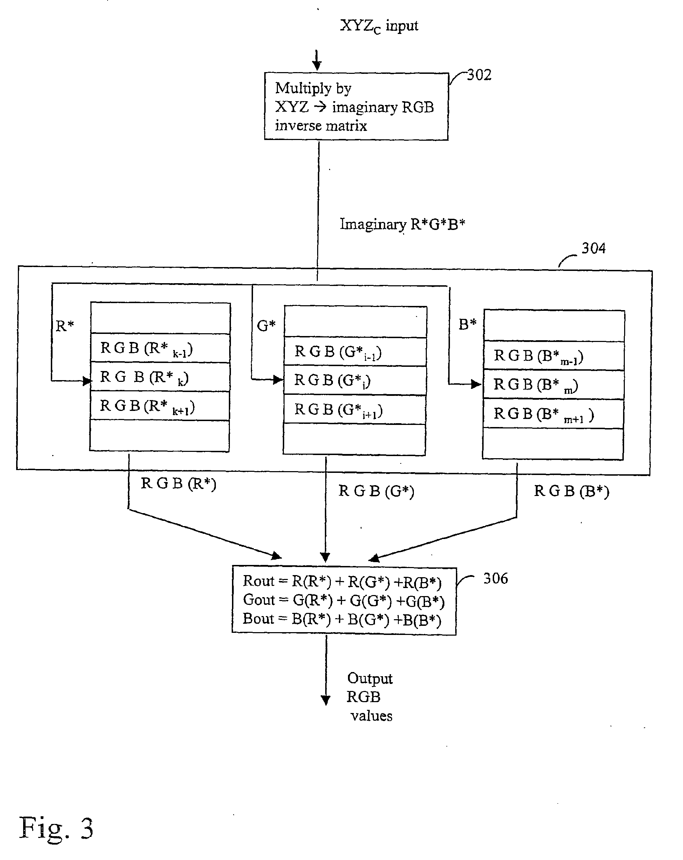

Reference is now made to Fig. 3, which schematically illustrates a flow chart of a non-iterative method of selective color display adjustment.

As shown in Fig. 3, the received $XYZ_C$ data signal or any other RGB data with absolute reference primaries, as described above, may be represented in terms of the set of imaginary primary colors.

As indicated at block 302, a conversion operator, e.g., an inverse matrix similar to the inverse matrix of Equation 2, may be applied to the input intensity values of the primary components to obtain the corresponding imaginary intensity values. Since the chromaticity of each imaginary primary color, e.g. the chromaticity of each imaginary primary color in the chromaticity diagram of Fig. 2, is independent of intensity, the inverse matrix format of Equation 2 above may be used to obtain the relative intensities of the imaginary primaries in a straightforward manner, namely from the input data the values $R^*$, $G^*$ and $B^*$ may be calculated.

According to other exemplary embodiments, if the absolute color is represented in terms of RGB space with a pre-defined set of fixed primaries, it may be useful to set the imaginary primaries to the values of the reference primaries. Thus, according to these embodiments, conversion of the input data into corresponding imaginary primary intensities, e.g., as indicated by block 302, may not be required.

As indicated at block 304, the method may include obtaining device-dependent intensity values corresponding to the imaginary intensity values, e.g., the relative intensities $R^*$, $G^*$, $B^*$ may be used to obtain the corresponding RGB values for each imaginary primary at the correct intensity level for that imaginary primary. For example a set of LUTs, each including a set of device-dependent intensity values corresponding to one of the imaginary intensity values, may be used. For example, a LUT corresponding to values of $R^*$ may include sets of device dependent intensity values R $(R^*)$, G$(R^*)$, and B$(R^*)$ such that a red imaginary primary at an intensity level $R^*$ may be produced by the display device as a combination of R$(R^*)$, G$(R^*)$, and B$(R^*)$. Accordingly, a LUT corresponding to values of $G^*$ may include sets of device dependent values R$(G^*)$, G$(G^*)$, and B$(G^*)$, and a LUT corresponding to values of $B^*$ may include sets of device dependent values R$(B^*)$, G$(B^*)$, and B$(B^*)$. According to some exemplary embodiments, the device-dependent values of the LUTs may be calculated off-line using the iterative method described above with reference to Fig. 1.

As indicated at block 306, the method may also include combining the device-dependent values, e.g., based on the primary color components. Combining the device-dependent values may include calculating a sum of the device-dependent values corresponding to each of the imaginary primaries. For example, in order to create the required $R^*$ value of the imaginary red primary, the corresponding combination, e.g., the sum, of the R, G and B signal values found in the $R^*$ LUT may be sent to the display. The same applies for the green and the blue imaginary primaries. Accordingly, the "R" signal sent to the display may be determined based on the sum of the R signals for the different imaginary primaries. Similarly, the B and G signals sent to the display may be determined based on the some of the different G and B signal components.

Since the display system may not be linear, the summation over the R, G and B signals, as described above, may cause a slight shift in the chromaticity of the actual primary colors reproduced by the display. However, it will be appreciated by persons skilled in the art that this shift would be negligible because, for example, the relative contribution of the imaginary G and B components in determining the R signal are typically small and do not significantly affect the over-all intensity of the primary. Similarly, the intensity levels of G and B are not significantly influenced by the additional, smaller, components contributing to their chromaticity correction.

Although the above methods are described in the context of three-primary color display systems, it will be appreciated by those skilled in the art that these methods are equally suitable for displays using four or more primary colors. For example, in a more-than-three-primary system, the color shift of each primary as a function of its intensity may be recorded as described above. Additionally, more than three imaginary primary colors may be defined by the corners of a more-than-three-sided shape of the gamut resulting from combinations of the real primaries at a certain intensity level, in analogy to the triangular gamut described above with reference to Fig. 2. Each such imaginary primary may have a fixed chromaticity, as described above, and thus the conversion of input colors to imaginary primaries may be readily determined using calculations analogous to those demonstrated above and/or as described in prior art publications relating to more-than-three primary displays. As described above, for each imaginary primary, off-line calculation may be used to determine the combination of device-dependent primaries that may provide a pre-defined set of intensity values of the imaginary primary. Similarly, as in the three-primary system, for each color input, the combination of imaginary primaries that yields that color may be calculated by analogous methods. Thus, the value of each imaginary primary at a given intensity level may be replaced by the pre-calculated set of device-dependent primaries that reproduce the imaginary primary at the correct intensity level and chromaticity.

In the above description, each of the imaginary primaries is described in terms of combinations of all primaries to yield the chromaticity of the imaginary primary at different intensity levels. In practice, according to embodiments of the invention, the calculations described above may be simplified for a more-than three primary color display. In a more than three primaries display, the red, green and blue primaries may have a narrow spectral range and thus their color shift with intensity may be relatively small. Additional primaries, e.g., cyan and yellow, may have a relatively wide spectral range and thus may suffer from large color shifts. Thus, according to some embodiments of the invention, it may be required to adjust intensity values corresponding to only some of the primary components. Furthermore, in many cases the selective color adjustment may be achieved by adding only one primary to the adjusted primary component, as described below.

According to some exemplary embodiment, a shift in the yellow primary may tend to be mostly on the red-green axis. If the imaginary yellow primary were chosen to be on the red edge of the yellow color shift, then when the intensity is changed the yellow primary would "drift" towards the green primary. In order to adjust such a drift, the intensity of the red primary may be increased, and at the same time an intensity value of the yellow primary may be reduced, in order to keep the displayed intensity at the required level. Thus, a fixed chromaticity yellow imaginary primary may be created by a combination of only two primaries, e.g., red and yellow. However, it will be appreciated by those skilled in the art -that the adjustment may be analogously achieved by a combination of green and yellow if the imaginary primary is chosen to be on the green side of the yellow color shift. In a similar manner, a color shift of the cyan primary may be adjusted by one primary, e.g., green or blue. It will be appreciated by those skilled in the art that in other embodiments of the invention, the use of three, i.e. a selected primary to be adjusted and two primaries on both sides of the selected primary, may be required to adjust the color shift of the selected primary.

Thus, according to some embodiments of the invention, the non-iterative method for selective color adjustment, e.g., as described with reference to Fig. 3, may be simplified, as described below.

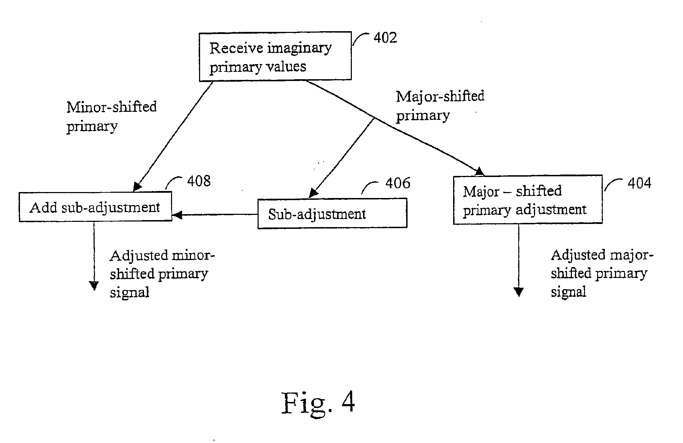

Reference is made to Fig. 4, which schematically illustrates a flow chart of a method of selective color adjustment for a more than three primary color display, in accordance with exemplary embodiments of the invention.

The following description may refer, for simplicity, to two categories of primary components, namely, major-shifted primary components and minor-shifted primary component. A major-shifted primary color may correspond to a primary component, e.g., yellow, which may have a relatively large color shift. A minor-shifted primary component may correspond to a primary component, e.g., red, which may be adjusted based on an adjustment of a major-shifted primary component. However, it will be appreciated by those skilled in the art that this categorization is for simplicity only, and that according to other embodiments of the invention the primary components may be categorized differently.

As indicated at block 402, the method may include receiving the imaginary primary values. The imaginary primary values may include at least one major-shifted imaginary primary component and at least one minor-shifted imaginary primary component.

As indicated at block 404, an adjusted major-shifted primary component value may be obtained based on the major-shifted imaginary primary component value. This may be achieved, for example, using a LUT including values of the adjusted major-shifted primary component corresponding to the values of the imaginary major-shifted primary component, e.g., as described above.

As indicated at block 406, for one or more minor-shifted imaginary primary colors, e.g., a red imaginary primary value, a sub-adjustment may be performed, for example, using a LUT including sub-adjustment values for the minor-shifted imaginary primary color, e.g., red, corresponding to the values of the major-shifted imaginary primary color, e.g. yellow, as described above.

As indicated at block 408, the sub-adjustment value may be added, for example, to the value of the imaginary minor-shifted primary. Thus, a major-shifted primary color signal sent to the display may include the adjusted major-shifted primary color value, and the sub-adjustment value may be added to the imaginary minor-shifted primary value to create a minor-shifted primary signal sent to the display. It may be noted that, for simplicity of description, it is assumed that the minor-shifted primary color does not have an adjustment or correction scheme, i.e., the imaginary minor-shifted primary is similar in behavior to the "real" minor-shifted primary. It will be appreciated by persons skilled in the art that an adjustment scheme
may also be applied to minor-shifted primary colors. In particular, a self-correction LUT on the value of the minor-shifted primary may be implemented.

Although the raw color inputs used by embodiments of the invention have been described above in terms of XYZ data, it should be appreciated that any other device-independent color representation may be used in conjunction with the present invention. Furthermore, device-depended color representation, such as RGB or YCbCr, or any other suitable formats, may be appropriately defined as "device- independent" colors, in the context of absolute color coordinates, such as the color coordinates of CRT phosphors. Therefore, the use of XYZ in describing the exemplary embodiments above should in no may be interpreted to limit the scope of the present invention.

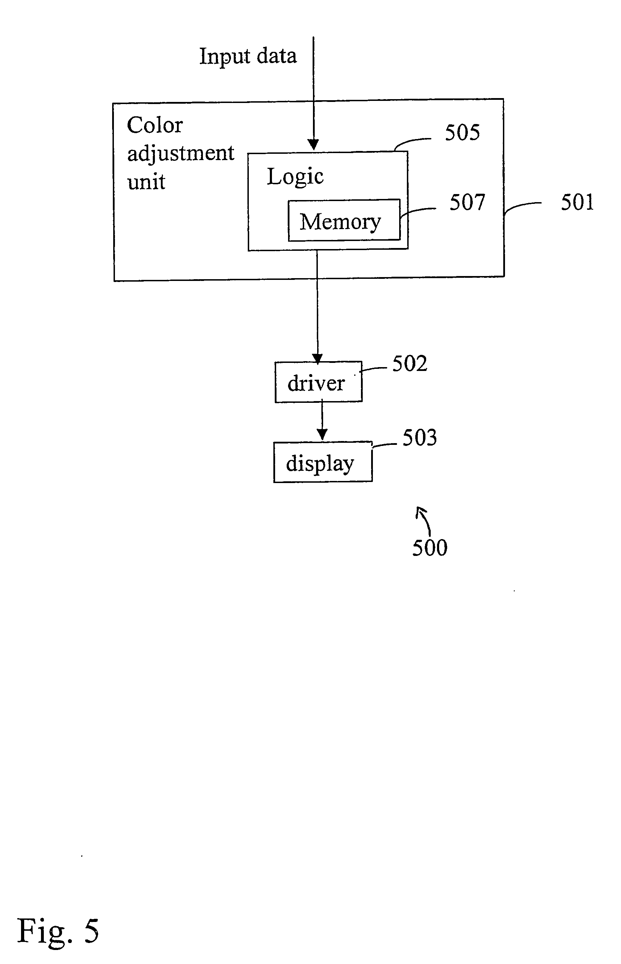

Reference is made to Fig. 5, which schematically illustrates a block diagram of a system 500 of selective color display adjustment in accordance with exemplary embodiments.

According to exemplary embodiments of the invention, system 500 may implement principles of embodiments of the selective color adjustment methods described above.

According to embodiments of the invention, system 500 may include a color adjustment unit 501 to selectively adjust an intensity value of a first primary color component of a pixel based, at least in part, on an intensity value of a second primary color component of the pixel. Unit 501 may include a logic unit 505 to receive unadjusted input data, and to produce an adjusted signal, e.g., a signal representing adjusted RGB color values, or adjusted color values in any other format of three or more primary colors, as discussed above, suitable for driving a color display device 503. The adjusted signal may be received by a driver 502, which drives the display device 503. Logic unit 505 may execute algorithms corresponding to any of the selective color adjustment methods described above. At least part of the function of logic unit 505 may be implemented by any combination of software and/or hardware. For example, logic unit 505 may include a CPU, DSP, FPGA, ASIC, or any other type of logic unit known in the art. Additionally or alternatively, part of the function of unit 505 may be implemented by means of a software driver and/or as a "plug-in" to an existing software driver. According to some exemplary embodiments, logic unit 505 may include one or more memory units 507 adapted to store one or more LUTs, e.g., as described above. For example, memory unit 507 may include a Random Access Memory (RAM), as is known in the art.

The present invention may be implemented in conjunction with any color display system known in the art. Further, any type of display system or device incorporating elements of the methods, systems device described above in combination with other known elements, is also included within the scope of the present invention. Although some embodiments of the present invention may be particularly suitable for display systems using LC devices, for example, direct-viewing displays, and sequential or simultaneous projection displays, it should be appreciated that other the invention may also be used in conjunction with any other type of display system.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within their scope.

**Claims**

1. A method of selectively adjusting chromaticity of colors displayed by a color display (503) to correct for intensity-dependent chromaticity variations caused by the display, the method comprising:

   - receiving (402) input pixel color intensity data for a pixel, said input pixel color intensity data comprising pixel intensity values for four or more primary color components and including at least one minor-shifted primary color component and at least one major-shifted primary color component, the major-shifted primary color component having a greater variation of chromaticity with intensity caused by the display than the minor shifted primary color component;
   - adjusting (404) the pixel intensity value of the at least one major-shifted primary color component for a pixel by a chromaticity correction value, said chromaticity correction value based on the pixel intensity value of only the major-shifted primary color component of said pixel; and
   - adjusting (408) the pixel intensity value of the at least one minor-shifted primary color component for said pixel by combining the pixel intensity value for the minor-shifted primary color component with a chromaticity correction value (406) based on said pixel intensity value of only said at least one major-shifted primary color component of said pixel.

2. A method according to claim 1 comprising performing said adjusting (408) for a plurality of pixels of a color image to be displayed by said color display (503).

**3.** The method of claim 1 or 2, wherein said combining comprises calculating an adjusted pixel intensity value for said at least one minor-shifted primary color component using a conversion operator dependent on the pixel intensity value of the at least one major-shifted primary color component.

**4.** The method of claim 1 comprising:

- adding a sub-adjustment value to a pixel intensity value for said at least one minor-shifted primary color component based on a pixel intensity value for said at least one major-shifted primary color component.

**5.** The method of claim 4 comprising performing the addition of the sub-adjustment using a look-up table including sub-adjustment values for minor shifted primary color components corresponding to pixel intensity values of major shifted primary color components.

**6.** A display system comprising:

- a color adjustment unit (501) configured to selectively adjust chromaticity of colors displayed by the display according to the method of any of claims 1 to 5.

**7.** The system of claim 6 comprising a driver (502) configured to receive adjusted pixel intensity values from said color adjustment unit (501) and to drive a color display device (503) according to said adjusted pixel intensity values.

**8.** The system of claim 6 configured to implement the method of claim 4, wherein said color adjustment unit (501) comprises a logic unit (505) to add said sub-adjustment value.

**9.** The system of claim 8 configured to implement the method of claim 5, wherein said logic unit (505) comprises a first memory unit (507) to store said look up table.

**Patentansprüche**

**1.** Ein Verfahren zur selektiven Einstellung der Chromatizität von Farben, die von einem Farbdisplay (503) angezeigt werden, um intensitätsabhängige Chromatizitätsvariationen, die durch das Display verursacht werden, zur korrigieren, wobei das Verfahren aus Folgenden besteht:

- Empfang (402) von Eingabedaten über Pixelfarbintensität für ein Pixelinput, wobei die genannten Eingabedaten über Pixelfarbintensität Pixelintensitätswerte für vier oder mehr Primärfarbenkomponenten enthalten und zumindest eine geringfügig verschobene Primärfarbenkomponente und zumindest eine erheblich verschobene Primärfarbenkomponente mit einbeziehen, wobei die erheblich verschobene Primärfarbenkomponente eine größere Chromatizitätsvariation als die geringfügig verschobene Primärfarbenkomponente aufweist, wobei die Intensität durch das Display verursacht wird;
- Einstellen (404) des Pixelintensitätswerts der zumindest einen erheblich verschobenen Primärfarbenkomponente für ein Pixel um einen Chromatizitätskorrekturwert, wobei der genannte Chromatizitätskorrekturwert auf dem Pixelintensitätswert von nur der erheblich verschobenen Primärfarbenkomponente des genannten Pixel basiert; und
- Einstellen (408) des Pixelintensitätswerts der zumindest einen geringfügig verschobenen Primärfarbenkomponente für das genannte Pixel durch Kombination des Pixelintensitätswerts für die geringfügig verschobene Primärfarbenkomponente mit einem Chromatizitätskorrekturwert (406) basierend auf dem genannten Pixelintensitätswert von nur der genannten zumindest einen erheblich verschobenen Primärfarbenkomponente des genannten Pixels.

**2.** Ein Verfahren entsprechend Anspruch 1 bestehend aus der genannten Einstellung (408) für mehrere Pixel eines Farbbilds, das durch das genannte Farbdisplay (503) angezeigt werden soll.

**3.** Das Verfahren entsprechend Anspruch 1 oder 2, wobei die genannte Kombination die Errechnung eines eingestellten Pixelintensitätswerts für die genannten zumindest eine geringfügig verschobene Primärfarbenkomponente umfasst, wobei ein Umwandlungsoperator in Abhängigkeit vom Pixelintensitätswert der zumindest einen erheblich verschobenen Primärfarbenkomponente verwendet wird.

**4.** Das Verfahren entsprechend Anspruch 1 bestehend aus:

Addieren eines Nebeneinstellwerts zu einem Pixelintensitätswert für die genannte zumindest eines geringfügig verschobene Primärfarbenkomponente basierend auf einem Pixelintensitätswert für die genannten zumindest eine erheblich verschobene Primärfarbenkomponente.

**5.** Das Verfahren entsprechend Anspruch 4 bestehend aus der Durchführung der Addition der Nebeneinstellung unter Verwendung einer Nachschlagtabelle einschließlich von Nebeneinstellwerten für geringfügig verschobene Primärfarbenkomponenten, die Pixelintensitätswerten von erheblich verschobenen Primärfarbenkomponenten entsprechen.

**6.** Ein Displaysystem bestehend aus:

einer Farbeinstelleinheit (501), die so konfiguriert ist, dass sie die Chromatizität von auf dem Display angezeigten Farben entsprechend des Verfahrens einer der Ansprüche 1 bis 5 selektiv einstellt.

**7.** Das System entsprechend Anspruch 6 bestehend aus einem Treiber (502), der so konfiguriert ist, dass er eingestellte Pixelintensitätswerte von der genannten Farbeinstelleinheit (501) empfängt, um eine Farbdisplayvorrichtung (503) entsprechend der genannten eingestellten Pixelintensitätswerte anzutreiben.

**8.** Das System entsprechend Anspruch 6, das so konfiguriert ist, dass es das Verfahren von Anspruch 4 implementiert, wobei die genannte Farbeinstelleinheit (501) eine Logikeinheit (505) zur Addierung des genannten Nebeneinstellwerts umfasst.

**9.** Das System entsprechend Anspruch 8, das so konfiguriert ist, dass es das Verfahren von Anspruch 5 implementiert, wobei die genannte Logikeinheit (50) eine erste Speichereinheit (507) zum Speichern der genannten Nachschlagtabelle umfasst.

**Revendications**

**1.** Un procédé d'ajustement sélectif de la chromaticité de couleurs affichées par un écran en couleurs (503) destiné à corriger des variations de chromaticité dépendantes de l'intensité provoquées par l'écran, le procédé comprenant :

- la réception (402) de données d'intensité de couleur de pixel en entrée pour un pixel, lesdites données d'intensité de couleur de pixel en entrée comprenant des valeurs d'intensité de pixel pour quatre ou plus composantes de couleurs primaires et comprenant au moins une composante de couleur primaire à décalage mineur et au moins une composante de couleur primaire à décalage majeur, la composante de couleur primaire à décalage majeur possédant une variation de chromaticité plus grande avec une intensité provoquée par l'écran que la composante de couleur primaire à décalage mineur,
- l'ajustement (404) de la valeur d'intensité de pixel de la au moins une composante de couleur primaire à décalage majeur pour un pixel par une valeur de correction de chromaticité, ladite valeur de correction de chromaticité étant fonction de la valeur d'intensité de pixel de seulement la composante de couleur primaire à décalage majeur dudit pixel, et
- l'ajustement (408) de la valeur d'intensité de pixel de la au moins une composante de couleur primaire à décalage mineur pour ledit pixel par la combinaison de la valeur d'intensité de pixel pour la composante de couleur primaire à décalage mineur avec une valeur de correction de chromaticité (406) fonction de ladite valeur d'intensité de pixel de seulement ladite au moins une composante de couleur primaire à décalage majeur dudit pixel.

**2.** Un procédé selon la Revendication 1 comprenant l'exécution dudit ajustement (408) pour une pluralité de pixels d'une image en couleurs destinée à être affichée par ledit écran en couleurs (503).

**3.** Le procédé selon la Revendication 1 ou 2, où ladite combinaison comprend le calcul d'une valeur d'intensité de pixel ajustée pour ladite au moins une composante de couleur primaire à décalage mineur au moyen d'un opérateur de conversion en fonction de la valeur d'intensité de pixel de la au moins une composante de couleur primaire à décalage majeur.

**4.** Le procédé selon la Revendication 1 comprenant :

- l'ajout d'une valeur de sous-ajustement à une valeur d'intensité de pixel pour ladite au moins une composante de couleur primaire à décalage mineur en fonction d'une valeur d'intensité de pixel pour ladite au moins une composante de couleur primaire à décalage majeur.

**5.** Le procédé selon la Revendication 4 comprenant l'exécution de l'ajout du sous-ajustement au moyen d'une table de consultation contenant des valeurs de sous-ajustement pour des composantes de couleurs primaires à décalage mineur correspondant à des valeurs d'intensité de pixel de composantes de couleurs primaires à décalage majeur.

**6.** Un système d'affichage comprenant :

- une unité d'ajustement de couleurs (501) configurée de façon à ajuster de manière sélective la chromaticité de couleurs affichées par l'écran selon le procédé de l'une quelconque des Revendications 1 à 5.

**7.** Le système selon la Revendication 6 comprenant un pilote (502) configuré de façon à recevoir des valeurs d'intensité de pixel ajustées à partir de ladite unité d'ajustement de couleurs (501) et à piloter un dispositif d'écran en couleurs (503) selon lesdites valeurs d'intensité de pixel ajustées.

**8.** Le système selon la Revendication 6 configuré de façon à mettre en oeuvre le procédé selon la Revendication 4, où ladite unité d'ajustement de couleurs (501) comprend une unité logique (505) destinée à ajouter ladite valeur de sous-ajustement.

**9.** Le système selon la Revendication 8 configuré de façon à mettre en oeuvre le procédé selon la Revendication 5, où ladite unité logique (505) comprend une première unité à mémoire (507) destinée à conserver en mémoire ladite table de consultation.

$XYZ_C$ input

Initialize conversion — 102

Convert intensity values — 104

108    106

RGB

R

$X_R\ Y_R\ Z_R\ (R_{k-1})$
$X_R\ Y_R\ Z_R\ (R_k)$
$X_R\ Y_R\ Z_R\ (R_{k+1})$

G

$X_G\ Y_G\ Z_G\ (G_{i-1})$
$X_G\ Y_G\ Z_G\ (G_i)$
$X_G\ Y_G\ Z_G\ (G_{i+1})$

B

$X_B\ Y_B\ Z_B\ (B_{m-1})$
$X_B\ Y_B\ Z_B\ (B_m)$
$X_B\ Y_B\ Z_B\ (B_{m+1})$

$X_R\ Y_R\ Z_R\ (R)$        $X_G\ Y_G\ Z_G\ (G)$        $X_B\ Y_B\ Z_B\ (B)$

Create direct matrix — 109

$$\begin{pmatrix} X_R(R) & X_G(G) & X_B(B) \\ Y_R(R) & Y_G(G) & Y_B(B) \\ Z_R(R) & Z_G(G) & Z_B(B) \end{pmatrix}$$

Invert matrix to create New inverse matrix — 110

Convert intensity values using adjusted conversion — 111

Output RGB values

yes ← Is difference between initial and adjusted values small enough ? — 112

no — 114

Reinitialize

Fig. 1

Fig. 2

XYZ$_C$ input

Multiply by
XYZ → imaginary RGB
inverse matrix
302

Imaginary R\*G\*B\*

304

R\*

R G B (R\*$_{k-1}$)
R G B (R\*$_k$)
R G B (R\*$_{k+1}$)

G\*

R G B (G\*$_{i-1}$)
R G B (G\*$_i$)
R G B (G\*$_{i+1}$)

B\*

R G B (B\*$_{m-1}$)
R G B (B\*$_m$)
R G B (B\*$_{m+1}$)

R G B (R\*)          R G B (G\*)          R G B (B\*)

Rout = R(R\*) + R(G\*) +R(B\*)
Gout = G(R\*) + G(G\*) +G(B\*)
Bout = B(R\*) + B(G\*) +B(B\*)
306

Output
RGB
values

# Fig. 3

Receive imaginary
primary values [~402

Minor-shifted
primary

Major-shifted
primary

Add sub-adjustment [~408

Sub-adjustment [~406

Major – shifted
primary adjustment [~404

Adjusted minor-
shifted primary
signal

Adjusted major-
shifted primary
signal

Fig. 4

Input data

Color
adjustment
unit

505

Logic

507

Memory

501

502

driver

503

display

500

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **CHING-YU TSAI et al.** Color Reproduction of Twist Nematic LCO by Polynomial Regression Applied in Primary-Invariance Model. *1999 SIO INTERNATIONAL SYMPOSIUM,* 18 May 1999